# EUROPÄISCHE PATENTSCHRIFT

(11) **EP 3 254 035 B1**
(45) Veröffentlichungstag und Bekanntmachung des Hinweises auf die Patenterteilung: **30.01.2019**
(21) Anmeldenummer: 16705904.7
(22) Anmeldetag: 04.02.2016
(51) Int. Cl.: F24S 20/20, F24S 60/00

(54) **SOLARKRAFTWERK MIT EINEM ERSTEN WÄRMETRÄGERKREISLAUF UND EINEM ZWEITEN WÄRMETRÄGERKREISLAUF**
SOLAR POWER PLANT COMPRISING A FIRST HEAT TRANSFER CIRCUIT AND A SECOND HEAT TRANSFER CIRCUIT
CENTRALE SOLAIRE COMPRENANT UN PREMIER CIRCUIT DE CALOPORTEUR ET UN DEUXIÈME CIRCUIT DE CALOPORTEUR

(30) Priorität: 05.02.2015 EP 15153990
(43) Veröffentlichungstag der Anmeldung: 13.12.2017
(73) Patentinhaber: BASF SE, 67056 Ludwigshafen (DE)
(72) Erfinder: WORTMANN, Jürgen, 67117 Limburgerhof (DE); LADENBERGER, Michael, 76855 Annweiler am Trifels (DE); FEDERSEL, Katharina, 69123 Heidelberg (DE); MAURER, Stephan, 67435 Neustadt (DE)
(86) Internationale Anmeldenummer: PCT/EP2016/052427
(87) Internationale Veröffentlichungsnummer: WO 2016/124709

(56) Entgegenhaltungen:
- WO-A1-2013/034587
- DE-A1-102011 005 481
- DE-A1-102011 007 370
- DE-A1-102011 007 650
- JP-A- H0 428 901
- US-A1- 2012 137 683
- US-A1- 2013 291 857

## Beschreibung

Die Erfindung geht aus von einem Solarkraftwerk mit einem ersten Wärmeträgerkreislauf und einem zweiten Wärmeträgerkreislauf, bei dem der erste Wärmeträgerkreislauf einen Speicher für heißes Wärmeträgermedium und einen Speicher für kaltes Wärmeträgermedium sowie ein die Speicher für heißes Wärmeträgermedium und kaltes Wärmeträgermedium verbindendes und durch ein Solarfeld führendes Rohrleitungssystem umfasst und der zweite Wärmeträgerkreislauf ein die Speicher für heißes Wärmeträgermedium und kaltes Wärmeträgermedium verbindendes Rohrleitungssystem umfasst, in dem mindestens ein Wärmeübertrager zum Verdampfen und Überhitzen von Wasser aufgenommen ist, wobei der Wärmeübertrager einen vom Wärmeträgermedium durchströmten Bereich und einen von Wasser durchströmten Bereich aufweist, die durch eine wärmeleitende Wandung getrennt sind, so dass Wärme vom Wärmeträgermedium an das Wasser übertragen werden kann.

Solarkraftwerke werden üblicherweise eingesetzt, um Solarenergie in elektrische Energie umzuwandeln. In linear konzentrierenden Solarkraftwerken wie Parabolrinnen-Solarkraftwerken oder Fresnel-Solarkraftwerken oder in Turmkraftwerken wird hierzu ein Wärmeträgermedium mittels einstrahlender Sonnenenergie erwärmt und in einem heißen Speicher zwischengespeichert. Der Zentralreceiver eines Turmkraftwerks entspricht dabei dem Solarfeld eines linear konzentrierenden Solarkraftwerkes. Dies erlaubt die Erzeugung elektrischer Energie auch während der Zeiten, zu denen die Sonne nicht scheint. Das erwärmte Wärmeträgermedium wird genutzt, um in einem Wärmeübertrager Wasser zu verdampfen und zu überhitzen. Hierzu wird das Wärmeträgermedium aus dem heißen Speicher durch den Wärmeübertrager geleitet und anschließend in einem kalten Speicher gesammelt. Das Wärmeträgermedium aus dem kalten Speicher kann dann wieder durch einstrahlende Sonnenenergie erwärmt werden. Der erzeugte überhitzte Dampf wird genutzt, um eine Turbine anzutreiben, die mit einem Generator zur Stromerzeugung verbunden ist. Zur Erwärmung des Wärmeträgermediums wird dieses durch sogenannte Receiver geleitet, in denen die einfallende Sonnenstrahlung mit Hilfe von Spiegeln gebündelt und auf eine Rohrleitung gerichtet wird, die von dem Wärmeträgermedium durchströmt wird.

Für einen effizienten Betrieb des Solarkraftwerks wird als Wärmeträgermedium in der Regel eine Salzschmelze eingesetzt, die auf Temperaturen von mehr als 400°C erwärmt werden kann. Salze, die üblicherweise als Wärmeträgermedium eingesetzt werden, sind Nitrate oder Nitrite der Alkalimetalle, beispielsweise Kaliumnitrat, Kaliumnitrit, Natriumnitrat, Natriumnitrit oder Mischungen daraus. Ein geeignetes Salz ist zum Beispiel das so genannte Solarsalz, eine Mischung aus Kaliumnitrat und Natriumnitrat im Gewichtsverhältnis von 40 : 60.

In dem Wärmeübertrager zur Verdampfung und Überhitzung des Dampfes wird ein erster Bereich von dem Wärmeträgermedium durchströmt und ein zweiter Bereich von Wasser. Der vom Wärmeträgermedium durchströmte Bereich ist von dem mit Wasser durchströmten Bereich durch eine wärmeleitende Wandung getrennt. Üblicherweise eingesetzte Wärmeübertrager sind zum Beispiel Rohrbündelwärmeübertrager, bei denen ein Medium durch Rohre strömt und das zweite Medium durch den die Rohre umgebenden Bereich. Weitere üblicherweise eingesetzte Wärmeübertrager sind zum Beispiel Plattenwärmeübertrager oder Spiralwärmeübertrager.

In Wärmeübertragern zur Vorwärmung, Verdampfung und Überhitzung von Wasser, wie sie in Solarkraftwerken eingesetzt werden, wird üblicherweise Wasserdampf mit einem Druck von mehr als 100 bar, perspektivisch bis 280 bar in superkritischen Kraftwerken, erzeugt. Auf der anderen Seite beträgt der Druck des Wärmeträgermediums in der Regel in linear konzentrierenden Solarkraftwerken weniger als 20 bar und in Turmkraftwerken weniger als 30 bar. Aufgrund dieses hohen Druckunterschieds gekoppelt mit hohen Durchflüssen, die Wirbel und damit Druckschwankungen und daraus folgend Schwingungen erzeugen können, sind der Wärmeübertrager und insbesondere die Wandungen, die das Wasser vom Wärmeträgermedium trennen, einer hohen mechanischen Dauerbelastung ausgesetzt, die zum Versagen der Wandung durch Bruch führen können. Hierdurch kommt es in der Folge zu einem massiven Eindringen von Wasser in das Wärmeträgermedium. Bei den in Solarkraftwerken auftretenden Temperaturen von z. B. 565°C bei aktuellen Turmkraftwerken, wirkt Wasser zersetzend auf die als Wärmeträger eingesetzten Nitrate und Nitrite der Alkalimetalle. So bilden sich aus Nitriten in Gegenwart von Wasser Nitrate, die einen wesentlich höheren Schmelzpunkt haben. Zusätzlich bilden sich Stickstoffoxide und Alkalihydroxide. Die Stickstoffoxide tragen dabei zu einer Volumenexpansion bei, die bei behinderter Abströmung, zum Beispiel aufgrund des geschlossenen ersten Wärmeträgerkreislaufs, zu einem deutlichen Druckanstieg führen. Dieser Druckanstieg kann im Folgenden zu einer Zerstörung weiterer Anlagenteile, beispielsweise der Speicher, führen. Bei den derzeitigen Solarkraftwerken kann diesem Szenario nur durch ausreichend dimensionierte Anlagenteile entgegengewirkt werden.

Neben der zusätzlichen mechanischen Belastung, die durch die Bildung der Stickstoffoxide und dem damit verbundenen Druckanstieg auftritt, ergibt sich auch eine chemische Belastung der Anlage, da die sich bildenden Alkalimetallhydroxide stark basisch sind und bei den hohem Temperaturen auch auf hochlegierte Stähle korrosiv wirken. Dies führt zu einer reduzierten Lebensdauer der Anlagenbauteile. Die Umwandlung von Nitriten in Nitrate und die damit verbundene Erhöhung der Schmelztemperatur kann zusätzlich zu einem Verlust der Einsetzbarkeit der als Wärmeträgermedium genutzten Salzschmelze führen, da diese bei den für die ursprüngliche Zusammensetzung ausgelegten Temperaturen einfrieren und so zu Schäden an dem Solarkraftwerk führen kann. Eine Regeneration der Salzschmelze mit Neutralisation der Base und Reduktion der Nitrate ist zwar prinzipiell möglich, jedoch nicht immer ohne weiteres in vorhandenen Anlagen durchführbar.

Um Schäden durch Bruch der Wandungen im Wärmeübertrager zu vermeiden, werden derzeit zum Beispiel Wärmeübertrager eingesetzt, die Doppelwandungen aufweisen. Hierdurch bricht zunächst nur eine Wandung und die zweite Wandung verhindert ein vollständiges Versagen. Der Bruch der einen Wandung kann durch eine Zwischenraumüberwachung detektiert werden und bei Bruch kann der Betrieb des Wärmeübertragers rechtzeitig unterbrochen werden, bevor weitere Schäden entstehen. Nachteil einer solchen Doppelwandung ist jedoch deren schlechtere Wärmeübertragungsfähigkeit im Vergleich zu einer Einfachwandung.

In EP-A 2 600 058 wird offenbart, dass in von einem Arbeitsmedium, beispielsweise Wasser, durchströmten Rohrleitungen in einem Wärmeübertrager Absperrvorrichtungen vorgesehen sind. Als Wärmeträgermedium wird zum Beispiel eine Salzschmelze eingesetzt, die außen um die Rohrleitungen des Wärmeübertragers strömt. Die Absperrvorrichtungen werden eingesetzt, um die Flussdichte des Arbeitsmediums durch den Wärmeübertrager zu regeln, um statische und dynamische Instabilitäten zu verhindern. Diese Absperrvorrichtungen schließen nicht die Zufuhrleitungen für das Wärmeträgermedium und können damit nicht verhindern, dass mit Wasser kontaminiertes Wärmeträgermedium ein nachgeschaltetes Speichersystem erreicht.

Die genannten Absperrvorrichtungen können im Prinzip auch nur eine Teilabsicherung eines Wärmeübertragers leisten, indem diese die Wasserzufuhr schließen. Darüber hinaus ist zu beachten, dass regelnde Stellorgane nicht ohne zusätzliche Ausrüstung so dicht sind, dass sie als Schließorgane einsetzbar sind, und demnach nicht zu einem ausreichend dichten Verschluss der Wasserzufuhr dienen können.

Die DE 10 2011 007 650 A1 offenbart ein Solarkraftwerk mit einem ersten und einem zweiten Wärmeträgerkreislauf, bei dem der erste Wärmeträgerkreislauf einen Speicher für heißes Wärmeträgermedium und einen Speicher für kaltes Wärmeträgermedium sowie ein die Speicher für heißes Wärmeträgermedium und kaltes Wärmeträgermedium verbindendes und durch ein Solarfeld führendes Rohrleitungssystem umfasst. Der zweite Wärmeträgerkreislauf umfasst ein die Speicher für heißes Wärmeträgermedium und kaltes Wärmeträgermedium verbindendes Rohrleitungssystem, in dem ein Wärmeübertrager zum Verdampfen und Überhitzen von Wasser aufgenommen ist, wobei der Wärmeübertrager einen vom Wärmeträgermedium durchströmten Bereich und einen von Wasser durchströmten Bereich aufweist, die durch eine wärmeleitende Wandung getrennt sind, so dass Wärme vom Wärmeträgermedium an das Wasser übertragen werden kann.

Aufgabe der vorliegenden Erfindung ist es daher, ein Solarkraftwerk bereitzustellen, das sicher betrieben werden kann ohne die Nachteile der bekannten Apparate wie reduzierte Wärmeübertragungsfähigkeit.

Diese Aufgabe wird gelöst durch ein Solarkraftwerk mit einem ersten Wärmeträgerkreislauf und einem zweiten Wärmeträgerkreislauf, bei dem der erste Wärmeträgerkreislauf einen Speicher für heißes Wärmeträgermedium und einen Speicher für kaltes Wärmeträgermedium sowie ein die Speicher für heißes Wärmeträgermedium und kaltes Wärmeträgermedium verbindendes und durch ein Solarfeld führendes Rohrleitungssystem umfasst und der zweite Wärmeträgerkreislauf ein die Speicher für heißes Wärmeträgermedium und kaltes Wärmeträgermedium verbindendes Rohrleitungssystem umfasst, in dem mindestens ein Wärmeübertrager zum Verdampfen und Überhitzen von Wasser aufgenommen ist, wobei der mindestens eine Wärmeübertrager einen vom Wärmeträgermedium durchströmten Bereich und einen von Wasser durchströmten Bereich aufweist, die durch eine wärmeleitende Wandung getrennt sind, so dass Wärme vom Wärmeträgermedium an das Wasser übertragen werden kann, wobei jeder Wärmeübertrager ein Bruchdetektionssystem, mit dem ein möglicher Bruch der wärmeleitenden Wandung detektiert werden kann, und Ventile zum Verschließen von Zufuhrleitungen und Ablaufleitungen für Wärmeträgermedium und Wasser aufweist, wobei bei Detektion eines Bruchs die Ventile in den Zufuhrleitungen und Ablaufleitungen für Wärmeträgermedium und Wasser geschlossen werden.

Im Rahmen der vorliegenden Erfindung wird der Begriff "Wasser" unabhängig vom Aggregatzustand verwendet. Im Zulauf zum Wärmeübertrager liegt das Wasser flüssig vor, im Inneren des Wärmeübertragers, in dem das Wasser verdampft und überhitzt wird als Sattdampf und überhitzter Dampf, so dass das Wasser den Wärmeübertrager in Form von Sattdampf oder überhitztem Dampf durch die Ablaufleitung verlässt.

Vorwärmer, Verdampfer und Überhitzer werden überwiegend in Form von Rohrbündelwärme-übertragern gebaut. In einer Ausführungsform wird das Arbeitsmedium, beispielsweise Wasser, mittels Pumpen oder im Naturumlauf durch die Rohre des Rohrbündels des Wärmeübertragers geführt. Das Wärmeträgermedium, beispielsweise eine Salzschmelze, befindet sich an der Außenseite der Rohre im Wärmeübertragergefäß und heizt das durch die Rohre des Rohrbündels strömende Arbeitsmedium auf. In Rohrleitungen können aufgrund relativ geringer Rohrdurchmesser hohe Drücke mit nur geringen Wandstärken gehalten werden. Die Dampferzeugung erfolgt innerhalb der Rohre. Daher sind bei dieser Ausführungsform die Rohre druckbelastet. Alternativ ist es jedoch auch möglich, das Arbeitsmedium durch das Wärmeübertragergefäß zu leiten und das Wärmeträgermedium, beispielsweise eine Salzschmelze, innerhalb der Rohre. Bei dieser Ausführungsform ist das Wärmeübertragergefäß druckbelastet. Beide Ausführungsformen sind auf den Vorwärmer, den Verdampfer und den Erhitzer unabhängig voneinander anwendbar. Das heißt, es ist beispielsweise möglich, den Verdampfer mit der zweiten Ausführungsform mit durch die Rohre strömendem Wärmeträgermedium zu realisieren und den Überhitzer mit der ersten Ausführungsform mit durch die Rohre strömendem Arbeitsmedium. Es sich jedoch auch alle anderen Kombinationen einsetzbar.

Durch das Schließen der Zufuhrleitungen und Ablaufleitungen für Wärmeträgermedium und Wasser wird zum einen verhindert, dass nach einem Bruch ungehindert weiter Wasser in den ersten Wärmeträgerkreislauf einströmen kann und zum anderen, dass mit Wasser verunreinigtes Wärmeträgermedium nicht weiter im ersten Wärmeträgerkreislauf strömt und insbesondere nicht in den Speicher für kaltes Wärmeträgermedium gelangt, in dem ansonsten eine vollständige Durchmischung erfolgen kann. Der Schaden wird auf den Bereich des Wärmeübertragers begrenzt und auch ein Kontakt des Wärmeträgermediums mit dem Wasser erfolgt nur im Bereich des Wärmeübertragers zwischen den Ventilen zum Verschließen der Zufuhrleitungen und Ablaufleitungen für Wärmeträgermedium und Wasser in den Wärmeübertrager und aus dem Wärmeübertrager.

In einer bevorzugten Ausführungsform ist mehr als ein Wärmeübertrager umfasst, in dem das Wasser vorgewärmt, verdampft und überhitzt wird. Bei einer größeren Anzahl an Wärmeübertragern ist es möglich, diese in geringerer Größe auszuführen, wodurch die Anfälligkeit für ein Versagen durch Bruch reduziert wird. Durch diese Maßnahme wird darüber hinaus auch bei Bruch das Ausmaß des Schadens reduziert, da kleinere Apparate kleinere Strömungsquerschnitte besitzen. Wenn mehrere Wärmeübertrager vorgesehen sind, können diese parallel geschaltet werden, so dass durch jeden Wärmeübertrager nur ein Teil des Wassers und des Wärmeträgermediums strömt. Zusätzlich ist es auch möglich, Wärmeübertrager in Reihe zu schalten, so dass nicht die vollständige Vorwärmung, Verdampfung und Überhitzung in einem Wärmeübertrager durchgeführt wird. Dies hat den Vorteil, dass ein Bruch leichter lokalisiert und isoliert werden kann.

Um zu vermeiden, dass durch das Schließen der Zufuhrleitungen und Ablaufleitungen für Wärmeträgermedium und Wasser Druckstöße, sogenannte Joukowsky-Stöße, auftreten, die zu einer weiteren mechanischen Belastung von Apparaten und Rohrleitungen führen können, ist es bevorzugt, wenn das Rohrleitungssystem für das Wärmeträgermedium im zweiten Wärmeträgerkreislauf einen Bypass aufweist, mit dem die Zufuhrleitung und die Ablaufleitung für das Wärmeträgermedium verbunden sind und Ventile umfasst sind, die im normalen Betrieb den Bypass verschließen und bei Detektion eines Bruchs im Wärmeübertrager die Zufuhrleitung und die Ablaufleitung zum Wärmeübertrager verschließen und den Bypass öffnen, so dass das Wärmeträgermedium durch den Bypass strömt. Durch den Bypass, der geöffnet wird, sobald die Zufuhrleitungen und Ablaufleitungen für das Wärmeträgermedium in den Wärmeübertrager geschlossen werden, kann das Wärmeträgermedium durch den Bypass strömen und ein Druckstoß wird vermieden. Hierbei ist es einerseits möglich, Dreiwegeventile einzusetzen, bei denen von der Strömung durch den Wärmeübertrager auf eine Strömung durch den Bypass umgeschaltet wird oder alternativ eine Kombination aus Zwei-Wege-Ventilen, die so geschaltet werden, dass beim Verschließen der Zufuhrleitungen und Ablaufleitungen gleichzeitig der Bypass geöffnet wird. Die Schaltung der Ventile wird dabei so aufeinander abgestimmt, dass Druckstöße vermieden werden. Dies ist zum Beispiel möglich, wenn das Öffnen des Bypasses schneller erfolgt als das Verschließen der Zufuhrleitungen und Ablaufleitungen zum Wärmeübertrager. Eine solche Umschaltung wird stoßfrei genannt.

Die Ventile, mit denen die Zufuhrleitungen und Ablaufleitungen für Wärmeträgermedium und Wasser geschlossen werden und der Bypass geöffnet wird, werden bevorzugt pneumatisch angesteuert. Im Unterschied zu einer pneumatischen Ansteuerung ist ein Elektroantrieb in der Regel langsamer und zudem kann ein Elektroantrieb schwerer "fail-safe" ausgelegt werden als ein pneumatischer Antrieb. Um jedoch auch im Fall eines möglichen Stromausfalls ein sicheres Schließen der Zufuhrleitungen und Ablaufleitungen und Öffnen des Bypasses zu gewährleisten, sollte auf elektrische Antriebe verzichtet werden. Eine bloß redundante elektrische Energieversorgung kann anlagentechnisch als nicht sicher gelten.

Um aufgrund des großen Druckunterschiedes und des dadurch erfolgenden Druckanstiegs in dem Wärmeträgermedium nach einem Bruch einer wärmeleitenden Wandung in einem Wärmeübertrager zu vermeiden, dass mit Wasser verunreinigtes Wärmeträgermedium unkontrolliert entgegen der eigentlichen Strömungsrichtung strömt, ist es vorteilhaft, in der Zufuhrleitung zum Wärmeübertrager eine Rückflusssicherung zu positionieren. Zusätzlich kann zur Reduktion der Strömungsgeschwindigkeit im Fall des Druckanstiegs im Wärmeträgermedium aufgrund eines Bruchs der wärmeleitenden Wandung im Wärmeübertrager auch eine Rückflusssicherung in der Ablaufleitung aus dem Wärmeübertrager positioniert sein. Eine geeignete Rückflusssicherung ist zum Beispiel eine Blende. Eine solche Blende ist üblicherweise eine Scheibe mit einer Öffnung, deren Durchmesser kleiner ist als der Durchmesser der Rohrleitung, in der die Blende aufgenommen ist. Aufgrund des kleineren Durchmessers erfolgt eine Reduktion des Volumenstroms im Bereich der Blende, so dass hierdurch eine Rückströmung reduziert oder sogar verhindert werden kann. Dabei erfolgt die Rückflusssicherung insbesondere dadurch, dass der Strömungswiderstand durch eine Entleerungsleitung nach dem Öffnen eines bei Grenzdruck öffnenden Verschlusses, wie nachfolgend beschrieben, oder durch eine Leitung ohne Blende deutlich kleiner ist als der Strömungswiderstand durch die Rückstrom-sichernden Blenden. Alternativ einsetzbare Rückschlagsicherungen sind bei den hohen Temperaturen und der Korrosivität der Salzschmelzen schwierig sicher zu betreiben.

Um den bei einem Bruch der wärmeleitenden Wandung entstehenden erhöhten Druck im Wärmeträgermedium zu reduzieren und dadurch zu verhindern, dass weitere Anlagenkomponenten des Solarkraftwerks versagen, sind eine oder mehrere Entleerungsleitungen umfasst, die jeweils mit sichernden Verschlüssen verschlossen sind, die bei Überschreitung eines Grenzdruckes öffnen. Solche sichernden Verschlüsse können Überströmer, auch in der Qualität von Sicherheitsventilen, oder Berstscheiben sein.

Die Entleerungsleitungen können in Strömungsrichtung des Wärmeträgermediums hinter mindestens einem Wärmeübertrager in einer oder mehreren Ablaufleitungen angeordnet sein. Bevorzugt ist aber, dass die Entleerungsleitungen möglichst nahe an den Wärmeüberträgern lokalisiert sind. Dieses wird zum Beispiel dadurch erreicht, dass eine oder mehrere Entleerungsleitungen auf jedem Wärmeübertrager angeordnet ist, diese beispielsweise direkt auf Apparateflansche montiert werden.

Über eine oder mehrere Entleerungsleitungen wird ein Auffangbehälter angeschlossen. Der Auffangbehälter wird vorzugsweise atmosphärisch betrieben, um eine ungehinderte Drucklableitung aus einem oder mehreren Wärmeübertragern sicherzustellen. Er ist gegen die Gefahr von in die Umgebung heraus spritzendem heißem Wärmeträgermedium zu sichern. Der Auffangbehälter wird bevorzugt so groß ausgelegt, dass sicher bei einem Bruch das gesamte Wärmeträgermedium aus den Wärmeübertragern samt Zuleitungsinhalt aufgenommen werden kann und zusätzlich ausreichend Raum für sich bildendes Gas verbleibt.

Durch den sichernden Verschluss wird verhindert, dass Wärmeträgermedium in den Auffangbehälter strömen kann, wenn das Solarkraftwerk störungsfrei läuft. Sollte eine wärmeleitende Wand im Wärmeübertrager brechen und Wasser in das Wärmeträgermedium gelangen, erhöht sich der Druck im Wärmeträgermedium. Dieser erhöhte Druck führt dazu, dass der sichernde Verschluss die Entleerungsleitung in den Auffangbehälter öffnet. Wärmeträgermedium und sich bildende Gase können nun in den Auffangbehälter strömen, so dass der Druck innerhalb der Rohrleitungen im ersten Wärmeträgerkreislauf nur minimal oder vorzugsweise gar nicht ansteigt.

Aufgrund der hohen Temperatur des Wärmeüberträgermediums auch noch nach Verlassen des Wärmeübertragers ist es weiterhin vorteilhaft, wenn die Entleerungsleitungen nach oben aus der Ablaufleitung oder den Wärmeübertragern abzweigt. Durch die Abzweigung nach oben wird verhindert, dass Feststoffe in die Entleerungsleitung sedimentieren und ggf. die Funktion des sichernden Verschlusses gefährden.

Um Beschädigungen an dem sichernden Verschluss zum Beispiel durch Korrosion aufgrund des Kontaktes mit dem Wärmeträgermedium zu vermeiden ist es weiterhin vorteilhaft, wenn die Entleerungsleitung mit Gas gefüllt ist, wobei das Gas auf einem Druck gehalten wird, der dem Druck des den Wärmeübertrager verlassenden Wärmeträgermediums entspricht, so dass kein Wärmeträgermedium in die Entleerungsleitung strömt. Andererseits ist jedoch auch darauf zu achten, dass der Druck des Gases den Druck des Wärmeträgermediums in der Ablaufleitung aus dem Wärmeübertrager nicht übersteigt, damit kein Gas in die Ablaufleitung oder in einen Wärmeübertrager einströmt. Besonders vorteilhaft ist es, wenn der Druck des Gases so gewählt wird, dass eine geringe Menge des Wärmeträgermediums in die Entleerungsleitung gelangt, in dieser aber bei nach oben abzweigender Entleerungsleitung zum Beispiel maximal 50 cm, bevorzugt maximal 25 cm und insbesondere maximal 10 cm hoch aufsteigt. Um zu verhindern, dass mehr Wärmeträgermedium im normalen Betrieb in die Entleerungsleitung strömt, ist es zum Beispiel möglich, den Druck des Wärmeträgermediums im Bereich der Abzweigung der Entleerungsleitung sowie des Gases in der Entleerungsleitung zu messen und den Druck des Gases durch ablassen oder nachführen von Gas so einzustellen, dass die Druckdifferenz zwischen Druck des Wärmeträgermediums und Druck des Gases so eingestellt wird, dass die maximale Füllhöhe des Wärmeträgermediums in der Entleerungsleitung nicht überschritten wird.

Das vor dem sichernden Verschluss angeordnete Gaspolster wirkt als thermischer Isolator, so dass weniger Wärme aus dem Wärmeträgermedium abgegeben wird.

Das Gas, mit dem die Entleerungsleitung befüllt wird, ist vorzugsweise Anlagengas, das heißt Gas, das zum Beispiel über einen zentralen Abgasauslass aus der Anlage entnommen werden kann. Wenn überschüssiges Gasvolumen in der Anlage anfällt, zum Beispiel in Folge thermischer Ausdehnung bei Temperaturerhöhung, ist es notwendig, das abgelassene Gas aufzufangen und in einem geeigneten Gasbehälter zu speichern. Alternativ ist es auch möglich, das Anlagengas zu komprimieren und in einen Druckgasspeicher zu füllen. Das Anlagengas wird zum Beispiel genutzt, um nicht belegtes Volumen im heißen Speicher und im kalten Speicher zu füllen.

Um bei einer notwendigen Entleerung des Wärmeübertragers in den Auffangbehälter zu verhindern, dass Wärmeträgermedium im Bereich des sichernden Verschlusses einfriert und hierdurch den Zulauf in den Auffangbehälter blockiert, ist es weiterhin vorteilhaft, wenn der sichernde Verschluss eine Beheizung umfasst, mit der der sichernde Verschluss auf eine Temperatur oberhalb der Erstarrungstemperatur des Wärmeträgermediums beheizt wird. Die Temperatur, auf die der sichernde Verschluss beheizt wird, kann dabei kleiner sein als die Betriebstemperatur des Wärmeträgermediums. Es ist lediglich darauf zu achten, dass die Temperatur oberhalb der Erstarrungstemperatur gehalten wird. Die Erstarrungstemperatur ist dabei abhängig vom eingesetzten Wärmeträgermedium. Eine Temperatur oberhalb der Erstarrungstemperatur kann einerseits durch eine Temperaturregelung sicher gestellt werden, andererseits ist es auch möglich, den sichernden Verschluss so weit entfernt von der heißen Prozessseite zu platzieren, dass sich im Gleichgewicht von Wärmezufuhr aus der heißen Prozessseite und Wärmeabstrahlung an die Umgebung eine geeignete Temperatur eingestellt. Eine geeignete Temperatur kann auch durch Wahl des Konstruktionsmaterials und durch Wahl der thermischen Isolationsstärke eingestellt werden.

Wenn die Temperatur, auf die der sichernde Verschluss gehalten wird, niedriger ist als die Temperatur des Wärmeträgermediums im laufenden Betrieb, wirkt das Gas in der Entleerungsleitung als thermischer Isolator. Es ist somit möglich, den sichernden Verschluss und weitere gegen hohe Temperaturen empfindliche mess- und regeltechnische Geräte thermisch von der Prozessseite, beispielsweise der Ablaufleitung, mit ihren hohen Temperaturen bis 600°C zu entkoppeln.

Durch die Platzierung des sichernden Verschlusses in einem Gasraum wird ein zusätzlicher Schutz vor der Berührung mit dem Wärmeträgermedium, zum Beispiel zur Vermeidung von Korrosion und damit auftretender Schädigungen des sichernden Verschlusses erzielt. Auch die thermische Isolierung auf einem niedrigeren Temperaturniveau verlängert die Lebensdauer des sichernden Verschlusses und verbessert dessen Funktionssicherheit.

Durch eine nach oben führende Entleerungsleitung wird ein Schutz vor sedimentierenden Feststoffen geschaffen. Damit wird die Funktionssicherheit des sichernden Verschlusses verbessert.

Damit die schützende Gasphase vor dem sichernden Verschluss erhalten bleibt, muss bei zu hohem Stand des Wärmeträgermediums in der Entleerungsleitung Gas eingespeist werden. Die Einspeisung kann über eine Standmessung geregelt werden. Eine Standmessung kann zum Beispiel durch einen Vibrationsgrenzschalter erfolgen, der über einen Siphon thermisch vom heißen Medium entkoppelt werden kann. Eine Standschaltung kann alternativ auch durch einen Temperaturgrenzschalter verwirklicht werden, da eine Benetzung des Temperaturgrenzschalters mit Wärmeträgermedium zu einem starken Anstieg der Temperatur am Temperaturgrenzschalter führt.

Ein geeigneter sichernder Verschluss, mit dem der Zulauf in den Auffangbehälter verschlossen ist, ist zum Beispiel eine Berstscheibe. Die Berstscheibe wird dabei so ausgelegt, dass diese bei einem bestimmten Druck, der oberhalb dem normalen Betriebsdruck liegt, bricht und so den Zulauf in den Auffangbehälter freigibt. Damit im Betrieb auftretende Druckschwankungen nicht zu einem Brechen der Berstscheibe führen, ist es bevorzugt, wenn diese erst bei Erreichen eines Drucks von 15 bar oberhalb des maximalen Betriebsdruck, bevorzugt von 10 bar oberhalb des maximalen Betriebsdrucks und insbesondere von 3 bar oberhalb des maximalen Betriebsdrucks bricht.

Um zu vermeiden, dass die Berstscheibe durch Korrosion geschädigt wird, ist es bevorzugt, wenn die Berstscheibe an einer Position angeordnet ist, an der diese gasumspült ist. Hierzu ist es zum Beispiel möglich, wie vorstehend beschrieben, die Berstscheibe in dem gasgefüllten Bereich der Entleerungsleitung anzuordnen.

Um einen möglichen Bruch in der wärmeleitenden Wandung zu detektieren wird erfindungsgemäß ein Bruchdetektionssystem eingesetzt. Ein solches Bruchdetektionssystem wird vorzugsweise diversitär redundant ausgelegt, um bei einem möglichen Ausfall eines Systems ein zweites System zur Verfügung zu haben, mit dem ein Bruch detektiert werden kann. Zur Erhöhung des Sicherheitsniveaus der Schaltungen kann bei Auslösung von nur einem Detektor die Sicherheitsschaltung eingeleitet werden. Soll aus wirtschaftlichen Gründen vermieden werden, dass durch Fehldetektion eine fehlerhafte Abschaltung der Wärmeüberträger erfolgt, kann erst bei Auslösen von zwei Detektoren eine Sicherheitsschaltung ausgeführt werden.

Als Bruchdetektionssysteme eignen sich zum Beispiel eine Druckmessung im ersten Wärmeträgerkreislauf, ein Auslösesensor des sichernden Verschlusses oder eine Schwingungsanalyse des Wärmeübertragers. Um bei einer Druckmessung zu vermeiden, dass der Sensor durch das Wärmeträgermedium geschädigt wird, ist es bevorzugt, den Drucksensor in einem Bereich zu positionieren, in dem kein Kontakt mit dem Wärmeträgermedium erfolgt, beispielsweise in dem mit Gas gefüllten Bereich der Entleerungsleitung. Wenn eine Berstscheibe als sichernder Verschluss eines Wärmeübertragers eingesetzt wird, ist es besonders bevorzugt, wenn der Auslösesensor der Berstscheibe als Bruchsensor des Wärmeübertragers wirkt.

Wenn eine Schwingungsanalyse genutzt wird, um einen Bruch der wärmeleitenden Wandung zu detektieren, ist es zum Beispiel möglich, ständig das durch die Strömung des Wassers und des Wärmeträgermediums erzeugte Geräusch im Wärmeübertrager aufzunehmen. Aus diesem Geräusch wird durch Fouriertransformation ein Frequenzspektrum gewonnen. Das Frequenzspektrum wird dabei in einer Lernphase belastungsabhängig für jeden Wärmeübertrager bestimmt. Aus dieser Lernphase werden frequenzabhängige Grenzwerte festgelegt, bei deren Überschreitung eine Sicherheitsschaltung erfolgt. Bevorzugt werden hohe Frequenzen zur Detektion von Brüchen der wärmeübertragenden Wandung herangezogen.

Um Kleinleckagen zu detektieren sind die vorstehend genannten Verfahren jedoch nicht empfindlich genug. Eine Detektion von Kleinleckagen kann jedoch durch prozessanalytische Untersuchung von Analysengas erfolgen. Analysengas ist Prozessgas, das zum Zweck einer Analyse aus dem Prozess entnommen wird. Hierbei kann Wasser durch Abkühlung und Kondensation von Analysengas, das sich im ersten Wärmeträgerkreislauf bildet, gefunden werden. Darüber hinaus kann bei Nitraten oder Nitriten der Alkalimetalle als Wärmeträgermedium durch die Art und Menge von gebildeten Stickstoffoxiden auf eindringendes Wasser geschlossen werden. Die Stickstoffoxide können zum Beispiel im Gasraum durch Infrarot-Spektroskopie, beispielsweise FTIR oder NDIR, bestimmt werden. Insbesondere Lachgas ist ein effektiver Indikator für eingedrungenes Wasser.

Zusätzlich ist es auch möglich, eine Analyse des Wärmeträgermediums durchzuführen und dabei nach Reaktionsprodukten zu suchen, die durch Reaktion mit Wasser entstehen.

Das Analysengas kann dabei beispielsweise aus dem Gasraum entnommen werden, der zum Schutz des sichernden Verschlusses aufgebaut wurde.

Um zu verhindern, dass im Falle eines Bruchs der wärmeleitenden Wandung in einem Wärmeübertrager verunreinigter Wärmeträger in den kalten Speicher oder auch den heißen Speicher gelangt, ist in der Ablaufleitung ein Quarantänebehälter aufgenommen. Da das Wärmeträgermedium zunächst in den Quarantänebehälter strömt und erst nach Durchlaufen des Quarantänebehälters in den kalten Speicher gelangt, wird noch einmal zusätzlich Zeit gewonnen, um im Falle eines Bruchs die Strömung des Wärmeträgermediums zu unterbrechen.

Der Quarantänebehälter enthält hierzu vorzugsweise Einbauten, beispielsweise Böden, die von dem Wärmeträgermedium umströmt werden, um so eine Durchmischung des Wärmeträgermediums im Quarantänebehälter zu vermeiden und zudem zu gewährleisten, dass das zuerst eingeströmte Wärmeträgermedium auch als erstes den Quarantänebehälter wieder verlässt. Der Quarantänebehälter ist dabei vorzugsweise in Strömungsrichtung des Wärmeträgermediums hinter der Entleerungsleitung in den Auffangbehälter positioniert. Hierdurch wird sichergestellt, dass das verunreinigte Wärmeträgermedium nicht den Quarantänebehälter durchströmen muss, bevor dieses in den Auffangbehälter abläuft. Weiterhin ist der Quarantänebehälter vorzugsweise in Strömungsrichtung des Wärmeträgermediums vor dem Ventil zum Verschließen der Ablaufleitung positioniert. Hierdurch wird vermieden, dass verunreinigtes Wärmeträgermedium nach dem Verlassen des Quarantänebehälters in den kalten Speicher strömen kann.

Das eingesetzte Wärmeträgermedium ist üblicherweise eine Salzschmelze. Neben einer Salzschmelze kann aber auch jedes andere für ein Solarkraftwerk übliche Wärmeträgermedium eingesetzt werden. Bevorzugt ist jedoch der Einsatz einer Salzschmelze. Besonders geeignete Salze für die Salzschmelze sind Alkalimetallnitrat, Alkalimetallnitrit, eine Mischung unterschiedlicher Alkalimetallnitrate oder Alkalimetallnitrite oder eine Mischung aus Alkalimetallnitrat und Alkalimetallnitrit. Ganz besonders bevorzugt ist das Alkalimetall Natrium oder Kalium. Bevorzugte Mischungen sind Natriumnitrat und Kaliumnitrat, Natriumnitrat, Kaliumnitrat und Kaliumnitrit oder Kaliumnitrat und Kaliumnitrit. Jede andere Mischung ist jedoch ebenfalls möglich. Der Anteil des jeweiligen Salzes wird entsprechend der gewünschten Betriebstemperatur gewählt. Bei höheren Betriebstemperaturen wird ein größerer Anteil an Nitraten eingesetzt, bei niedrigeren Betriebstemperaturen ein größerer Anteil an Nitriten. Ein allgemein übliches eingesetztes Salz ist das sogenannte Solarsalz, eine Mischung aus 60 Gew.-% Natriumnitrat und 40 Gew.-% Kaliumnitrat.

Auch wenn andere Salzschmelzen als Nitrat- und Nitritmischungen eingesetzt werden, kann es notwendig sein, die Wärmeübertrager gegen Bruch zu sichern. So entwickeln zum Beispiel Chloride bei sehr hohen Temperaturen mit Wasserdampf schädliches Chlorwasserstoffgas und Fluoride das extrem toxische Fluorwasserstoffgas.

Wenn mehrere Wärmeübertrager umfasst sind, ist es möglich, die vorstehend beschriebenen Eirichtungen, das heißt die Ventile zum Verschließen der Zufuhrleitung und Ablaufleitung, den Bypass, die Rückflusssicherung, den Auffangbehälter und den Quarantänebehälter für jeden Wärmeübertrager separat vorzusehen, oder jeweils für zwei oder mehrere Wärmeübertrager oder auch für alle Wärmeübertrager gemeinsam. Hierzu werden die entsprechenden Einrichtungen jeweils entweder vor oder hinter einem Verteiler in die einzelnen Wärmeübertrager und entsprechend hinter oder vor einer Zusammenführung aus den einzelnen Wärmeübertragern angeordnet.

Auch die Detektionssysteme und die Entleerungsleitungen mit sicherndem Verschluss können mehrfach errichtet werden. Durch mehrfache Detektion lässt sich ein Bruch lokalisieren und die Reichweite der Sicherheitsschaltung auf den geschädigten Wärmetauscher begrenzen.

Solarkraftwerke gemäß der Erfindung sind insbesondere linear konzentrierende Solarkraftwerke wie Parabolrinnen-Solarkraftwerke oder Fresnel-Solarkraftwerke oder Turmkraftwerke, bei denen der Receiver auf einem Turm angeordnet ist und die Solarstrahlung von um den Turm herum angeordneten Spiegeln auf die Turmspitze reflektiert wird.

Als heißer Speicher und kalter Speicher für das Wärmeträgermedium können getrennte Speicher eingesetzt werden oder ein gemeinsamer Speicher, der in diesem Fall als Schichtenspeicher ausgeführt ist. Auch ist es möglich, mehrere heiße Speicher und mehrere kalte Speicher vorzusehen.

Ein Ausführungsbeispiel der Erfindung ist in den Figuren dargestellt und wird in der nachfolgenden Beschreibung näher erläutert.

Es zeigen:
Figur 1 eine schematische Darstellung des ersten und zweiten Wärmeträgerkreislaufs eines linear konzentrierenden Solarkraftwerks,
Figur 2 eine Ablaufleitung des Wärmeträgermediums mit daraus abzweigender Entleerungsleitung,
Figur 3 einen Wärmeübertrager mit Berstscheiben als sicherndem Verschluss.

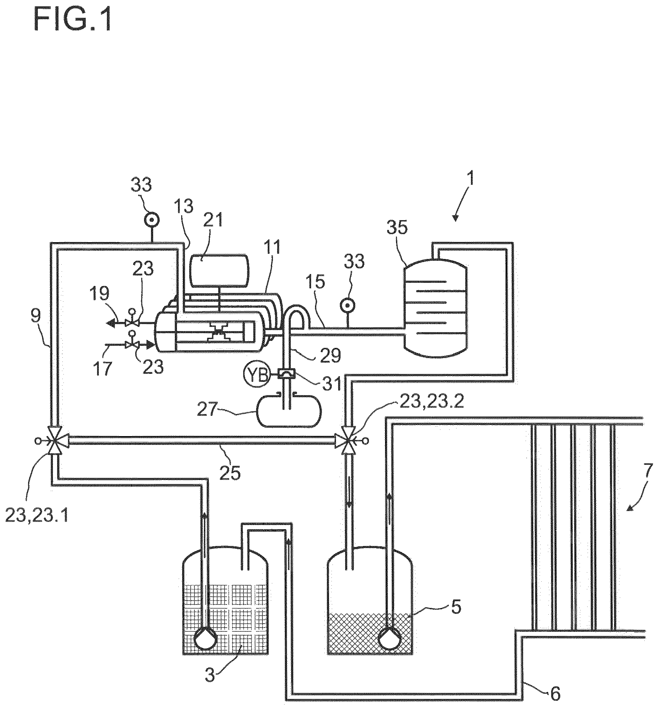

In Figur 1 sind der erste Wärmeträgerkreislauf und der zweite Wärmeträgerkreislauf eines linear konzentrierenden Solarkraftwerks dargestellt.

Ein linear konzentrierendes Solarkraftwerk 1 umfasst einen heißen Speicher 3 und einen kalten Speicher 5, die durch ein Rohrleitungssystem 6 eines ersten Wärmeträgerkreislaufs, das durch ein Solarfeld 7 führt, miteinander verbunden sind. Bei Sonneneinstrahlung wird Wärmträgermedium aus dem kalten Speicher 5 durch das Solarfeld 7 geleitet, im Solarfeld 7 durch die einstrahlende Sonnenenergie erwärmt und weiter in den heißen Speicher 3 geführt.

Um das Wärmträgermedium, beispielsweise eine Salzschmelze, im Solarfeld durch einstrahlende Sonnenenergie aufzuheizen, sind im Solarfeld Receiver angeordnet. In den Receivern wird das einfallende Sonnenlicht mit Hilfe von Spiegeln auf eine Rohrleitung, in der das Wärmeträgermedium strömt, gebündelt reflektiert. Hierdurch heizt sich das Wärmeträgermedium auf. In linear konzentrierenden Solarkraftwerken sind die Receiver über lange Strecken parallel und in Reihe geschaltet. Bei Parabolrinnen-Solarkraftwerken sind die Spiegel jeweils in Form einer Parabolrinne um die Leitung angeordnet und bei Fresnel-Solarkraftwerken sind bewegliche Spiegel unterhalb der Rohrleitungen angeordnet, wobei die Spiegel entsprechend der Richtung der Sonneneinstrahlung ausgerichtet werden, um immer eine optimale Ausnutzung der einstrahlenden Sonnenenergie sicherzustellen. Die Receiverleitungen in dem linear konzentrierenden Solarkraftwerk können dabei wie hier dargestellt linear parallel zueinander verlaufen oder auch als Rohrleitungsschleifen.

Alternativ zu dem hier dargestellten Solarfeld 7 eines linear konzentrierenden Solarkraftwerks ist es auch möglich, zum Beispiel ein Turmkraftwerk einzusetzen, in dem der Receiver als Spitze auf einem Turm angeordnet ist und die Spiegel auf die Turmspitze ausgerichtet sind.

Der Aufbau eines linear konzentrierenden Solarkraftwerks oder eines Turmkraftwerks und die Anordnung der Receiver im Solarfeld 7 beziehungsweise auf dem Turm des Turmkraftwerks sind dem Fachmann bekannt.

Das erwärmte Wärmeträgermedium wird im Betrieb des Solarkraftwerks unabhängig von einstrahlender Sonnenenergie, also auch zu den Zeiten, in denen keine Sonne scheint, aus dem heißen Speicher 3 in ein zweites Rohrleitungssystem 9 eines zweiten Wärmeträgerkreislaufs eingeleitet. Im regulären Betrieb wird das Wärmeträgermedium mindestens einem Wärmeübertrager 11 zugeführt, in dem Wasser vorgewärmt, verdampft und überhitzt wird. Hierzu wird in dem Wärmeübertrager 11 Wärme vom Wärmeträgermedium an das Wasser indirekt über eine wärmeleitende Wandung, mit der der vom Wärmeträgermedium und der vom Wasser durchströmte Bereich getrennt sind, übertragen. Hierbei ist es möglich, das Wasser in einem Wärmeübertrager vorzuwärmen, zu verdampfen und zu überhitzen oder in mehreren Wärmeübertragern. Wenn mehrere Wärmeübertrager 11 eingesetzt werden, können diese parallel geschaltet sein, so dass in jedem Wärmeübertrager 11 ein Teil des Wassers durch Wärmeübertragung von einem Teil des Wärmeträgermediums vorgewärmt, verdampft und überhitzt wird. Auch ist es möglich, Wärmeübertrager 11 in Reihe zu schalten. In diesem Fall wird zum Beispiel ein Wärmeübertrager zum Verdampfen und ein weiterer zum Überhitzen des Dampfs eingesetzt. Auch ist es möglich, Wärmeübertrager sowohl in Reihe als auch parallel zu schalten.

Um im Wärmeübertrager 11 Wärme vom Wärmeträgermedium an das Wasser zu übertragen, wird über eine erste Zufuhrleitung 13 Wärmeträgermedium in den Wärmeübertrager eingespeist. Das Wärmeträgermedium durchströmt den Wärmeübertrager 11 und verlässt diesen durch eine erste Ablaufleitung 15. Das zu verdampfende und zu überhitzende Wasser wird über eine zweite Zufuhrleitung 17 zugeführt und der im Wärmeübertrager 11 erzeugte überhitzte Dampf durch eine zweite Ablaufleitung 19 abgezogen und zu einer Turbine geführt. Die Turbine wird mit Hilfe des überhitzten Dampfes angetrieben und ist mit einem Generator verbunden, in dem elektrische Energie erzeugt wird.

Nach dem Durchströmen durch den Wärmeübertrager 11 fließt das Wärmeträgermedium zurück in den kalten Speicher 5.

Da aufgrund des großen Druckunterschieds zwischen dem überhitzten Dampf und dem Wärmträgermedium im Wärmeübertrager große Belastungen auf die wärmeleitenden Wandungen wirken, können diese brechen. Ein Bruch der Wärmeleitenden Wandung führt dazu, dass Wasser mit dem Wärmeträgermedium in Kontakt kommt, was bei Einsatz von Salzschmelzen, insbesondere von Nitriten und Nitraten der Alkalimetalle, zu einer chemischen Reaktion unter Bildung von Stickstoffoxiden und Alkalimetallhydroxiden führen kann. Bei Einsatz von Nitriten entstehen zudem durch die Reaktion mit Wasser auch Nitrate, die eine höhere Erstarrungstemperatur als die Nitrite haben. Durch den Kontakt mit Wasser wird daher das Wärmeträgermedium geschädigt und kann nicht mehr im normalen Betrieb des Solarkraftwerks eingesetzt werden. Die entstehenden Alkalimetallhydroxide wirken zudem korrosiv und können das Material der Anlagenkomponenten des Solarkraftwerks schädigen. Durch die Bildung der Stickstoffoxide und auch aufgrund des deutlich höheren Drucks im Dampfkreislauf steigt der Druck im zweiten Wärmeträgerkreislauf an.

Um einen möglichen Bruch zu erkennen, wird ein Bruchdetektionssystem 21 eingesetzt. Hierzu eignen sich zum Beispiel, wie vorstehend beschrieben, eine Druckmessung, ein Bruchsensor einer Berstscheibe oder eine Schwingungsanalyse.

Wenn ein Bruch detektiert wird, werden die Zufuhrleitung 13 für das Wärmeträgermedium in den Wärmeübertrager 11, die Ablaufleitung 15 für das Wärmeträgermedium in den Wärmeübertrager 11 sowie die Zufuhrleitung 17 und die Ablaufleitung 19 für das Wasser verschlossen, um zu vermeiden, dass mit Wasser verunreinigtes Wärmeträgermedium in den kalten Speicher 5 und gegebenenfalls von dort durch das Rohrleitungssystem 6 und das Solarfeld 7 in den heißen Speicher 3 gelangt. Zum Verschließen der Zufuhrleitungen 13, 17 und der Ablaufleitungen 15, 19 in den Wärmeübertrager 11 sind Ventile 23 vorgesehen.

Um einen Druckstoß im Rohrleitungssystem 9 des zweiten Wärmeträgerkreislaufs zu verhindern, werden vorzugsweise, wie hier dargestellt, die Zufuhrleitung 13 und die Ablaufleitung 15 für das Wärmeträgermedium über einen Bypass 25 miteinander verbunden. Hierzu ist es möglich, wie hier dargestellt, Drei-Wege-Ventile vorzusehen, wobei ein erstes Ventil 23.1 in der Zufuhrleitung 13 des Wärmeträgermediums zum Wärmeübertrager 11 und ein zweites Ventil 23.2 in der Ablaufleitung 15 des Wärmeträgermediums aus dem Wärmeübertrager 11 angeordnet sind. Bei Bruch oder Leck im Wärmeübertrager 11 werden durch entsprechende Umschaltung der Ventile 23.1, 23.2 die Zulaufleitung 13 und die Ablaufleitung 15 verschlossen und der Bypass 25 geöffnet. Das Wärmeträgermedium kann dadurch ungehindert weiterfließen und ein Druckstoß kann vermieden werden. Alternativ ist es auch möglich, anstelle der hier dargestellten Drei-Wege-Ventile 23.1, 23.2 jeweils zwei Zwei-Wege-Ventile vorzusehen, wobei jeweils ein Ventil zum Verschließen der Zulaufleitung 13 und der Ablaufleitung 15 eingesetzt wird und ein zweites Ventil zum Öffnen des Bypasses. Da sich bei jeweils zwei Zwei-Wege-Ventilen das Öffnen und Schließen von Leitungen individuell steuern lässt, ist diese Ausführungsform bevorzugt.

Um bei einem Bruch einer wärmeleitenden Wand im Wärmeübertrager 11 oder bei einem Leck einen großen Druckanstieg in dem Rohrleitungssystem 9 des zweiten Wärmeträgermediums zu verhindern, wird in einer bevorzugten Ausführungsform ein Auffangbehälter 27 über eine Entleerungsleitung 29 an die Ablaufleitung 15 aus dem Wärmeübertrager 11 angeschlossen. Hierzu zweigt die Entleerungsleitung 29 vorzugsweise nach oben aus der Ablaufleitung 15 ab. Durch die Abzweigung nach oben wirkt die Entleerungsleitung, die vorzugsweise mit Gas geflutet ist, als thermische Konvektionsbremse.

Um zu vermeiden, dass Wärmeträgermedium während des normalen Betriebs in den Auffangbehälter 27 strömt, ist dieser mit einem sichernden Verschluss 31 verschlossen. Der sichernde Verschluss 31 ist dabei so gestaltet, dass dieser bei einem Druckanstieg in der Ablaufleitung 15 und damit in der Entleerungsleitung 29 den Zulauf in den Auffangbehälter 27 öffnet. Ein geeigneter sichernder Verschluss 31 ist dabei zum Beispiel eine Berstscheibe.

Um weiterhin bei einem Druckanstieg durch Wassereintritt in das Wärmeträgermedium zu verhindern, dass das Wärmeträgermedium mit hoher Geschwindigkeit durch die Ablaufleitung 15 strömt und insbesondere entgegen der eigentlichen Strömungsrichtung durch die Zulaufleitung 13 zurückströmt, sind vorzugsweise in der Zulaufleitung 13 und der Ablaufleitung 15 Rückflusssicherungen 33 eingebaut.

Geeignete Rückflusssicherungen 33 sind zum Beispiel Blenden in den jeweiligen Leitungen, wobei mit den Blenden im Bereich der jeweiligen Blende der Durchflussquerschnitt verringert wird.

Um weiterhin zu vermeiden, dass mit Wasser verunreinigtes Wärmeträgermedium bis in den kalten Speicher gelangt, bevor die Ventile 23 geschlossen sind, ist vorgesehen, wenn in der Ablaufleitung 15 in Strömungsrichtung des Wärmeträgermediums vor dem zweiten Ventil 23.2 ein Quarantänebehälter 35 aufgenommen ist. Das Wärmeträgermedium durchströmt den Quarantänebehälter 35, wodurch die Laufzeit zwischen Wärmeübertrager 11 und kaltem Speicher 5 erhöht wird. Wenn Wärmeträgermedium mit Wasser verunreinigt wird, sammelt sich dieses somit im Quarantänebehälter und kann entsprechend aus dem Quarantänebehälter entnommen werden. Dies ist insbesondere dann von Vorteil, wenn bereits ein Teil des mit Wasser verunreinigtem Wärmeträgermediums an der Abzweigung zum Auffangbehälter 27 vorbeigeströmt ist, bevor der sichernde Verschluss 31 öffnet oder wenn der Druck in der Ablaufleitung 15 so hoch ist, dass trotz geöffnetem sicherndem Verschluss 31 ein Teil des Wärmeträgermediums in der Ablaufleitung 15 weiterströmt.

Im Quarantänebehälter 35 sind vorzugsweise Einbauten aufgenommen, die vom Wärmeträgermedium umströmt werden, um zu vermeiden, dass es im Quarantänebehälter 35 zu einer Durchmischung kommt. Durch die Einbauten wird sichergestellt, dass das Wärmeträgermedium, das als erstes in den Quarantänebehälter 35 eingeströmt ist, auch als erstes wieder aus dem Quarantänebehälter 35 ausströmt. Geeignete Einbauten sind zum Beispiel Böden, die mäandernd von dem Wärmeträgermedium umströmt werden.

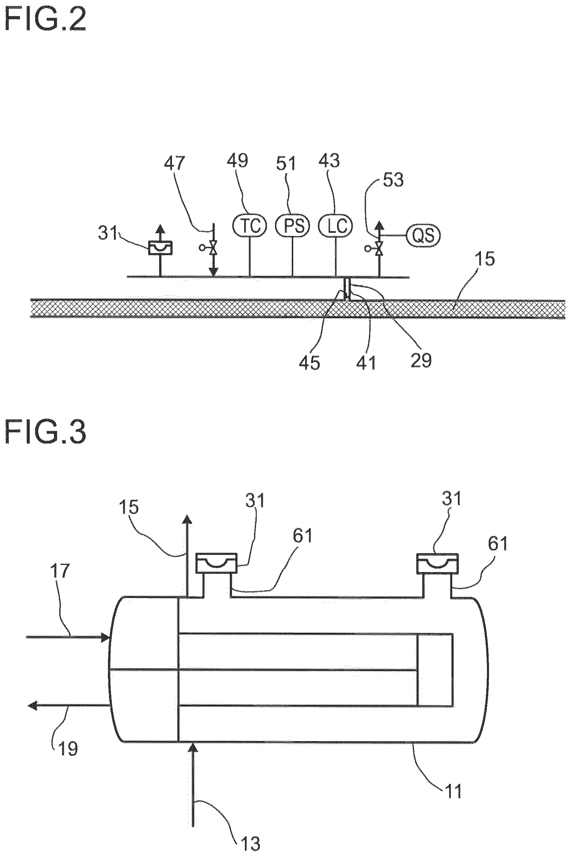

Figur 2 zeigt eine Ablaufleitung des Wärmeträgermediums mit daraus abzweigender Entleerungsleitung.

Aus der Ablaufleitung 15 zweigt die Entleerungsleitung 29 nach oben ab. Um den sichernden Verschluss 31 im normalen Betrieb des Solarkraftwerks 1 vor zu hohen Temperaturen und vor Kontakt mit dem Wärmeträgermedium zu schützen, ist die Entleerungsleitung 29 mit Gas gefüllt. Hierdurch bildet sich in der Entleerungsleitung ein Gasraum 41 aus.

Eine Füllstandsmessung 43 mit Regelung an der Entleerungsleitung 29 sichert das Niveau der Phasengrenze 45 zwischen Gas und Wärmeträgermedium. Bei zu hohem Flüssigkeitsstand kann Prozessgas über eine Gasleitung 47 in den Gasraum 41 geleitet werden. Bei tiefem Stand ist keine Maßnahme erforderlich.

In diesem thermisch von den Prozessbedingungen im zweiten Wärmeträgerkreislauf entkoppelten Gasraum 41 kann darüber hinaus ein Temperatursensor 49 mit Regelung und Beheizung platziert werden. Damit ist es möglich, die Temperatur des Gasraums 41 sicher immer oberhalb der Erstarrungstemperatur des Wärmeträgermediums zu halten.

Auch eine Druckmessung 51, die üblicherweise nicht bis zur maximalen Betriebstemperatur betreibbar ist, kann an dem thermisch isolierten Gasraum 41 angeordnet werden. Die Druckmessung 51 kann als Detektor für einen Bruch einer wärmeleitenden Wandung im Wärmeübertrager 11 eingesetzt werden. Bei Überschreiten eines vorgegebenen Grenzwertes kann die Druckmessung eine Sicherheitsschaltung auslösen, durch die zum Beispiel die Ventile 23 geschlossen werden.

Aus dem thermisch entkoppelten Gasraum 41 kann über eine Analysenleitung 53 Analysengas entnommen werden. Durch Analyse des Analysengases auf Wasser, Stickstoffoxide und andere Reaktionsprodukte kann ein Bruch oder auch eine Kleinleckage in einem Wärmeübertrager 11 detektiert werden. Zusätzlich ist es auch möglich, bei zu hohem Druck in dem Gasraum 41 Gas über die Analysenleitung 53 abzulassen.

Ein Wärmeübertrager mit Berstscheiben als sicherndem Verschluss ist in Figur 3 dargestellt.

Alternativ zu der in den Figuren 1 und 2 dargestellten Ausführungsform, bei der die Entleerungsleitung 29 an der Ablaufleitung 15 angeschlossen ist, ist es auch möglich, die Entleerungsleitung direkt am Wärmeübertrager 11 zu montieren. Hierzu ist am Wärmeübertrager 11 mindestens ein Flansch 61 ausgebildet, an den die Entleerungsleitung 29 angeschlossen werden kann. In dem mindestens einen Flansch 61, in der hier dargestellten Ausführungsform weist der Wärmeübertrager 11 zwei Flasche 61 auf, ist der sichernde Verschluss 31 aufgenommen. Bei Überschreitung eines Grenzdrucks öffnet der sichernde Verschluss 31 und das Wärmeträgermedium kann direkt aus dem Wärmeübertrager 11 in die Entleerungsleitung 29 abfließen.

### Bezugszeichenliste

- 1: Solarkraftwerk
- 3: heißer Speicher
- 5: kalter Speicher
- 6: Rohrleitungssystem eines ersten Wärmeträgerkreislaufs
- 7: Solarfeld
- 9: Rohrleitungssystem eines zweiten Wärmeträgerkreislaufs
- 11: Wärmeübertrager
- 13: Zufuhrleitung des Wärmeträgermediums
- 15: Ablaufleitung des Wärmeträgermediums
- 17: Zufuhrleitung für Wasser
- 19: Ablaufleitung für Dampf
- 21: Bruchdetektionssystem
- 23: Ventil
- 23.1: erstes Ventil
- 23.2: zweites Ventil
- 25: Bypass
- 27: Auffangbehälter
- 29: Entleerungsleitung
- 31: sichernder Verschluss
- 33: Rückflusssicherung
- 35: Quarantänebehälter
- 41: Gasraum
- 43: Füllstandsmessung
- 45: Phasengrenze
- 47: Gasleitung
- 49: Temperaturmessung
- 51: Druckmessung
- 61: Flansch

## Patentansprüche

1. Solarkraftwerk mit einem ersten Wärmeträgerkreislauf und einem zweiten Wärmeträgerkreislauf, bei dem der erste Wärmeträgerkreislauf einen Speicher (3) für heißes Wärmeträgermedium und einen Speicher (5) für kaltes Wärmeträgermedium sowie ein die Speicher (3, 5) für heißes Wärmeträgermedium und kaltes Wärmeträgermedium verbindendes und durch ein Solarfeld (7) führendes Rohrleitungssystem (6) umfasst und der zweite Wärmeträgerkreislauf ein die Speicher (3, 5) für heißes Wärmeträgermedium und kaltes Wärmeträgermedium verbindendes Rohrleitungssystem (9) umfasst, in dem mindestens ein Wärmeübertrager (11) zum Verdampfen und Überhitzen von Wasser aufgenommen ist, wobei der mindestens eine Wärmeübertrager (11) einen vom Wärmeträgermedium durchströmten Bereich und einen von Wasser durchströmten Bereich aufweist, die durch eine wärmeleitende Wandung getrennt sind, so dass Wärme vom Wärmeträgermedium an das Wasser übertragen werden kann, **dadurch gekennzeichnet, dass** jeder Wärmeübertrager (11) ein Bruchdetektionssystem (21), mit dem ein möglicher Bruch der wärmeleitenden Wandung detektiert werden kann, und Ventile (23) zum Verschließen von Zufuhrleitungen (13, 17) und Ablaufleitungen (15, 19) für Wärmeträgermedium und Wasser aufweist, wobei bei Detektion eines Bruchs die Ventile (23) in den Zufuhrleitungen (13, 17) und Ablaufleitungen (15, 19) für Wärmeträgermedium und Wasser geschlossen werden, wobei in der Ablaufleitung (15) ein Quarantänebehälter (35) aufgenommen ist.

2. Solarkraftwerk gemäß Anspruch 1, **dadurch gekennzeichnet, dass** das Rohrleitungssystem (9) für das Wärmeträgermedium im zweiten Wärmeträgerkreislauf einen Bypass (25) aufweist, mit dem die Zufuhrleitung (13) und die Ablaufleitung (15) für das Wärmeträgermedium verbunden sind und Ventile (23.1, 23.2)) umfasst sind, die im normalen Betrieb den Bypass (25) verschließen und bei Detektion eines Bruchs im Wärmeübertrager (11) die Zufuhrleitung (13) und die Ablaufleitung (15) zum Wärmeübertrager (11) verschließen und den Bypass (25) öffnen, so dass das Wärmeträgermedium durch den Bypass (25) strömt.

3. Solarkraftwerk gemäß Anspruch 1 oder 2, **dadurch gekennzeichnet, dass** in der Zufuhrleitung (13) zum Wärmeübertrager (11) eine Rückflusssicherung (33) positioniert ist, wobei die Rückflusssicherung (33) vorzugsweise eine Blende ist.

4. Solarkraftwerk gemäß einem der Ansprüche 1 bis 3, **dadurch gekennzeichnet, dass** eine oder mehrere Entleerungsleitungen umfasst sind, die jeweils mit sichernden Verschlüssen (31) verschlossen sind, die bei Überschreitung eines Grenzdrucks öffnen.

5. Solarkraftwerk gemäß Anspruch 4, **dadurch gekennzeichnet, dass** jeweils eine oder mehrere Entleerungsleitungen (29) in einen Auffangbehälter (27) münden.

6. Solarkraftwerk gemäß Anspruch 4 oder 5, **dadurch gekennzeichnet, dass** die Entleerungsleitungen (29) jeweils nach oben aus der Ablaufleitung (15) abzweigen.

7. Solarkraftwerk gemäß einem der Ansprüche 4 bis 6, **dadurch gekennzeichnet, dass** die Entleerungsleitung (29) mit Gas gefüllt ist, wobei das Gas auf einem Druck gehalten wird, der dem Druck des den Wärmeübertrager (11) verlassenden Wärmeträgermediums entspricht, so dass kein Wärmeträgermedium in die Entleerungsleitung (29) strömt.

8. Solarkraftwerk gemäß einem der Ansprüche 4 bis 7, **dadurch gekennzeichnet, dass** der sichernde Verschluss (31) eine Beheizung umfasst, mit der der sichernde Verschluss (31) auf eine Temperatur oberhalb der Erstarrungstemperatur des Wärmeträgermediums beheizt wird.

9. Solarkraftwerk gemäß einem der Ansprüche 4 bis 8, **dadurch gekennzeichnet, dass** die Entleerungsleitungen (29) in Strömungsrichtung des Wärmeträgermediums hinter mindestens einem Wärmeübertrager (11) in einer oder mehreren Ablaufleitungen (15) angeordnet sind oder jeweils direkt auf Apparateflansche (61) des Wärmeübertragers (11) montiert werden.

10. Solarkraftwerk gemäß einem der Ansprüche 4 bis 9, **dadurch gekennzeichnet, dass** der sichernde Verschluss (31) eine Berstscheibe ist.

11. Solarkraftwerk gemäß Anspruch 10, **dadurch gekennzeichnet, dass** die Berstscheibe gasumspült ist.

12. Solarkraftwerk gemäß Anspruch 1, **dadurch gekennzeichnet, dass** der Quarantänebehäl ter (35) in Strömungsrichtung des Wärmeträgermediums hinter der Entleerungsleitung (29) positioniert ist.

13. Solarkraftwerk gemäß einem der Ansprüche 1 bis 12, **dadurch gekennzeichnet, dass** das Wärmeträgermedium eine Salzschmelze ist.

14. Solarkraftwerk gemäß einem der Ansprüche 1 bis 13, **dadurch gekennzeichnet, dass** das Wärmeträgermedium ein Alkalimetallnitrat, ein Alkalimetallnitrit, eine Mischung unterschiedlicher Alkalimetallnitrate oder Alkalimetallnitrite oder eine Mischung aus Alkalimetallnitrat und Alkalimetallnitrit ist.

## Claims

1. A solar power plant with a first heat transfer medium circuit and with a second heat transfer medium circuit, in which the first heat transfer medium circuit comprises a store (3) for hot heat transfer medium and a store (5) for cold heat transfer medium and also a pipeline system (6) connecting the stores (3, 5) for hot heat transfer medium and for cold heat transfer medium and leading through a solar array (7), and the second heat transfer medium circuit comprises a pipeline system (9) connecting the stores (3, 5) for hot heat transfer medium and for cold heat transfer medium and in which at least one heat exchanger (11) for the evaporation and superheating of water is accommodated, the at least one heat exchanger (11) having a region through which the heat transfer medium flows and a region through which water flows, said regions being separated by a heat-conducting wall, so that heat can be transmitted from the heat transfer medium to the water, wherein each heat exchanger (11) has a break detection system (21), by means of which a possible break of the heat-conducting wall can be detected, and valves (23) for the closing of supply lines (13, 17) and outflow lines (15, 19) for heat transfer medium and water, upon the detection of a break the valves (23) in the supply lines (13, 17) and outflow lines (15, 19) for heat transfer medium and water being closed, a quarantine tank (35) being accommodated in the outflow line (15).

2. The solar power plant according to claim 1, wherein the pipeline system (9) for the heat transfer medium in the second heat transfer medium circuit has a bypass (25), to which the supply line (13) and the outflow line (15) for the heat transfer medium are connected, and valves (23.1, 23.2) are comprised, which close the bypass (25) during normal operation and, when a break is detected in the heat exchanger (11), close the supply line (13) and the outflow line (15) to the heat exchanger (11) and open the bypass (25), so that the heat transfer medium flows through the bypass (25).

3. The solar power plant according to claim 1 or 2, wherein a backflow prevention (33) is positioned in the supply line (13) to the heat exchanger (11), the backflow prevention (33) preferably being a diaphragm.

4. The solar power plant according to one of claims 1 to 3, wherein one or more emptying lines are comprised, which are in each case closed by means of securing closures (31) which open when a limit pressure is overshot.

5. The solar power plant according to claim 4, wherein in each case one or more emptying lines (29) issue into a collecting tank (27).

6. The solar power plant according to claim 4 or 5, wherein the emptying lines (29) in each case branch off upwardly from the outflow line (15).

7. The solar power plant according to one of claims 4 to 6, wherein the emptying line (29) is filled with gas, the gas being held at a pressure which corresponds to the pressure of the heat transfer medium leaving the heat exchanger (11), so that no heat transfer medium flows into the emptying line (29) .

8. The solar power plant according to one of claims 4 to 7, wherein the securing closure (31) comprises heating, by means of which the securing closure (31) is heated to a temperature above the solidification temperature of the heat transfer medium.

9. The solar power plant according to one of claims 4 to 8, wherein the emptying lines (29) are arranged in one or more outflow lines (15) downstream of at least one heat exchanger (11) in the flow direction of the heat transfer medium or are in each case mounted directly on apparatus flanges (61) of the heat exchanger (11).

10. The solar power plant according to one of claims 4 to 9, wherein the securing closure (31) is a bursting disk.

11. The solar power plant according to claim 10, wherein the bursting disk is washed around with gas.

12. The solar power plant according to claim 1, wherein the quarantine tank (35) is positioned downstream of the emptying line (29) in the flow direction of the heat transfer medium.

13. The solar power plant according to one of claims 1 to 12, wherein the heat transfer medium is a molten salt.

14. The solar power plant according to one of claims 1 to 13, wherein the heat transfer medium is an alkali metal nitrate, an alkali metal nitrite, a mixture of different alkali metal nitrates or of alkali metal nitrites or a mixture of alkali metal nitrate and of alkali metal nitrite.

## Revendications

1. Centrale solaire comprenant un premier circuit caloporteur et un deuxième circuit caloporteur, dans lequel le premier circuit caloporteur comprend un accumulateur (3) pour un fluide caloporteur chaud et un accumulateur (5) pour un fluide caloporteur froid ainsi qu'un système de conduites tubulaires (6) reliant les accumulateurs (3, 5) pour le fluide caloporteur chaud et le fluide caloporteur froid et conduisant à travers un champ solaire (7) et le deuxième circuit caloporteur comprenant un système de conduites tubulaires (9) reliant les accumulateurs (3, 5) pour le fluide caloporteur chaud et le fluide caloporteur froid, dans lequel est logé au moins un échangeur de chaleur (11) pour l'évaporation et la surchauffe de l'eau, l'au moins un échangeur de chaleur (11) présentant une région parcourue par le fluide caloporteur et une région parcourue par l'eau, lesquelles sont séparées par une paroi thermoconductrice de telle sorte que la chaleur provenant du fluide caloporteur puisse être transmise à l'eau, **caractérisée en ce que** chaque échangeur de chaleur (11) présente un système de détection de rupture (21) avec lequel une rupture éventuelle de la paroi thermoconductrice peut être détectée et des soupapes (23) pour fermer des conduites d'alimentation (13, 17) et des conduites d'écoulement (15, 19) pour le fluide caloporteur et l'eau, les soupapes (23), à la détection d'une rupture, étant fermées dans les conduites d'alimentation (13, 17) et les conduites d'écoulement (15, 19) pour le fluide caloporteur et l'eau, un récipient de quarantaine (35) étant logé dans la conduite d'écoulement (15).

2. Centrale solaire selon la revendication 1, **caractérisée en ce que** le système de conduites tubulaires (9) pour le fluide caloporteur présente, dans le deuxième circuit caloporteur, une dérivation (25) avec laquelle la conduite d'alimentation (13) et la conduite d'écoulement (15) pour le fluide caloporteur sont connectées et des soupapes (23.1, 23.2) sont prévues, lesquelles ferment la dérivation (25) en fonctionnement normal et, à la détection d'une rupture dans l'échangeur de chaleur (11), ferment la conduite d'alimentation (13) et la conduite d'écoulement (15) vers l'échangeur de chaleur (11) et ouvrent la dérivation (25) de telle sorte que le fluide caloporteur s'écoule à travers la dérivation (25).

3. Centrale solaire selon la revendication 1 ou 2, **caractérisée en ce qu'**une protection contre le reflux (33) est disposée dans la conduite d'alimentation (13) vers l'échangeur de chaleur (11), la protection contre le reflux (33) étant de préférence un diaphragme.

4. Centrale solaire selon l'une quelconque des revendications 1 à 3, **caractérisée en ce qu'**une ou plusieurs conduites de vidange sont prévues, lesquelles sont à chaque fois fermées avec des fermetures de sécurité (31) qui s'ouvrent en cas de dépassement d'une pression limite.

5. Centrale solaire selon la revendication 4, **caractérisée en ce qu'**à chaque fois une ou plusieurs conduites de vidange (29) débouchent dans un récipient de collecte (27).

6. Centrale solaire selon la revendication 4 ou 5, **caractérisée en ce que** les conduites de vidange (29) partent à chaque fois vers le haut depuis la conduite d'écoulement (15).

7. Centrale solaire selon l'une quelconque des revendications 4 à 6, **caractérisée en ce que** la conduite de vidange (29) est remplie de gaz, le gaz étant maintenu à une pression qui correspond à la pression du fluide caloporteur quittant l'échangeur de chaleur (11), de telle sorte qu'aucun fluide caloporteur ne s'écoule dans la conduite de vidange (29).

8. Centrale solaire selon l'une quelconque des revendications 4 à 7, **caractérisée en ce que** la fermeture de sécurité (31) comprend un chauffage avec lequel la fermeture de sécurité (31) est chauffée à une température au-dessus de la température de solidification du fluide caloporteur.

9. Centrale solaire selon l'une des revendications 4 à 8, **caractérisée en ce que** les conduites de vidange (29), dans la direction d'écoulement du fluide caloporteur, sont disposées derrière au moins un échangeur de chaleur (11) dans une ou plusieurs conduites d'écoulement (15) ou sont à chaque fois montées directement sur des brides d'appareil (61) de l'échangeur de chaleur (11).

10. Centrale solaire selon l'une quelconque des revendications 4 à 9, **caractérisée en ce que** la fermeture de sécurité (31) est un disque de rupture.

11. Centrale solaire selon la revendication 10, **caractérisée en ce que** le disque de rupture est enveloppé d'une circulation de gaz.

12. Centrale solaire selon la revendication 1, **caractérisée en ce que** le récipient de quarantaine (35) est disposé dans la direction d'écoulement du fluide caloporteur derrière la conduite de vidange (29) .

13. Centrale solaire selon l'une quelconque des revendications 1 à 12, **caractérisée en ce que** le fluide caloporteur est un sel fondu.

14. Centrale solaire selon l'une quelconque des revendications 1 à 13, **caractérisée en ce que** le fluide caloporteur est un nitrate de métal alcalin, un nitrite de métal alcalin, un mélange de différents nitrates de métaux alcalins ou de nitrites de métaux alcalins ou un mélange de nitrate de métal alcalin et de nitrite de métal alcalin.
